# EUROPEAN PATENT SPECIFICATION

(11) **EP 2 366 732 B1**
(45) Date of publication and mention of the grant of the patent: **26.06.2013**
(21) Application number: 11156347.4
(22) Date of filing: 01.03.2011
(51) Int. Cl.: C08K 5/00, C08K 5/34, C08K 5/357

(54) **Mixtures of sterically hindered amines for polymer stabilisation**
Mischungen aus sterisch gehinderten Aminen zur Polymerstabilisierung
Mélanges d'amines entravés stériquement pour la stabilisation de polymères

(30) Priority: 15.03.2010 IT MI20100412
(43) Date of publication of application: 21.09.2011
(73) Proprietor: 3V SIGMA S.p.A, 20121 Milano (IT)
(72) Inventor: Seccomandi, Carlo, 24121, Bergamo BG (IT); Bemporad, Luca, 24121, Bergamo BG (IT); Malanchini, Claudio, 24121, Bergamo BG (IT)
(74) Representative: Montelatici, Linda Anna

(56) References cited:
- WO-A1-01/62836
- CIBA-GEIGY AG: "Synergistic stabilizer compositons (Ciba-Geigy AG)", RESEARCH DISCLOSURE, MASON PUBLICATIONS, HAMPSHIRE, GB, vol. 345, no. 49, 1 January 1993 (1993-01-01), XP007118569, ISSN: 0374-4353

## Description

The present invention relates to new mixtures of polypiperidine compounds, which are able to impart to polymeric materials of different nature, in particular polyolefins, a high stability towards oxidative action and photodegradation.

It is known that polymers are subject to deterioration due to the action of heat, light and air, which cause loss of mechanical properties, discoloring and other undesired effects.

Various classes of compounds have been proposed for the stabilization of polymeric materials, principally against UV radiation of the solar light, such as for example benzophenone and benzotriazole derivatives. These compounds confer to the polymers an acceptable stability, which is however not yet sufficient for the practical needs with reference to the fibers, films and raffia made of olefinic polymers.

Polyalkylpiperidine polymers, normally denominated HALS (Hindered Amine Light Stabilizers) are much more effective and many patents relate to them. Just as examples, mention can be made of the following patent publications: US 4,530,950, DE 1,929,928, US 3,640,928, US 4,477,615, US 4,233,412, US 4,331,586, DE 2,636,144, DE 2,456,864, US 4,315,859, US 4,104,248, US 4,086,204, US 4,038,280.

Some publications also describe synergic mixtures of HALS, such as for example US 4,692,486, US 4,863,981, US 5,021,485, EP 0709426, EP 0728806.

It has been now surprisingly found that particularly effective are mixtures of low molecular weight HALS, generally defined as monomeric HALS, and high molecular weight HALS, generally defined as polymeric or macromolecular HALS, comprising from 10% to 90% of oligomers having the following general formula (I), already described in the pending Italian application n. MI2009A00168, 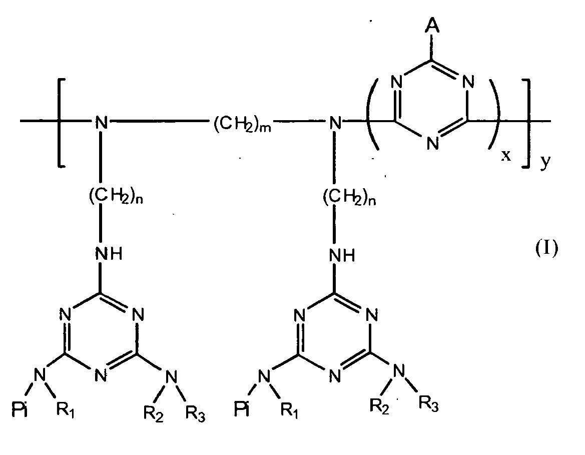 wherein **x** is 0 or 1;
**y** is between 1 e 10;
**m** and **n**, independently of each other, are numbers between 2 e 8;
R₁ is selected in the group consisting of hydrogen and C₁-C₄ straight-chain or branched-chain alkyl groups;
R₂ and R₃, independently of each other, are selected in the group consisting of hydrogen, C₁-C₈ straight-chain or branched-chain alkyl groups, cycloalkyl groups having 5 to 12 carbon atoms, or form together with the nitrogen atom a heterocyclic ring having 5 to 7 members, including other heteroatoms such as O;
**A** is a NPiR₁ or NR₂R₃ group;
wherein **Pi** represents the following group of formula (II) 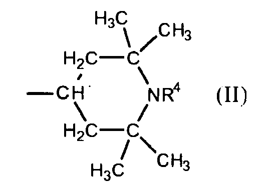 wherein R⁴ is selected in the group consisting of hydrogen, C₁-C₄ straight-chain and branched-chain alkyl group, and OR⁵ groups, wherein R⁵ is H, or C₁-C₈ straight-chain or branched-chain alkyl group;
and wherein the group NPiR₁ is different from the group NR₂R₃.
Said mixtures of low molecular weight and high molecular weight HALS further comprise at least one of the following compounds of formula B, C, D, E, F or G: 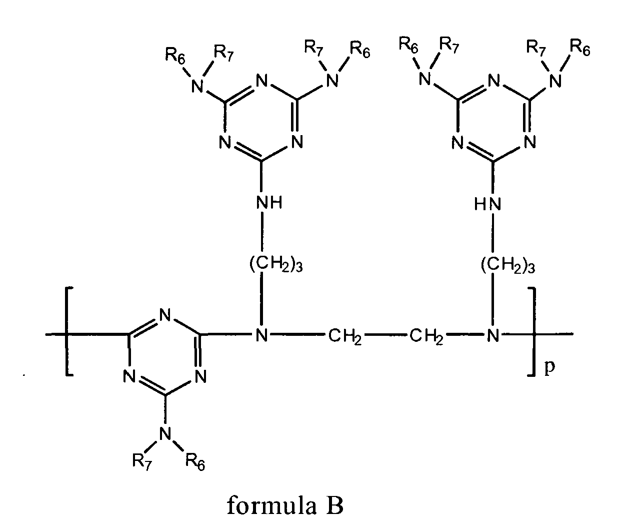 wherein:
R₆ is: 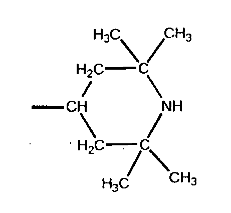 or: 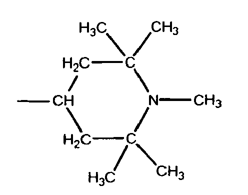 R₇ is selected in the group consisting of H and C₁-C₄ straight-chain and branched-chain alkyl groups;
p is a number between 2 and 10; 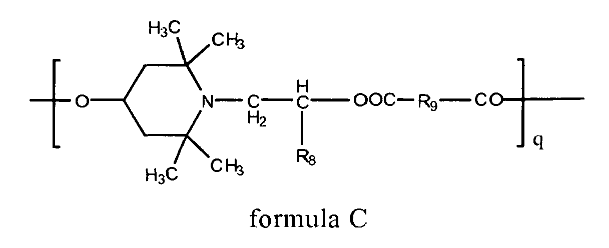 wherein:
R₈ is selected in the group consisting of hydrogen and methyl group;
R₉ is a direct bond or it is selected in the group consisting of the C₁-C₁₀ alkylenes;
q is a number between 2 and 50; 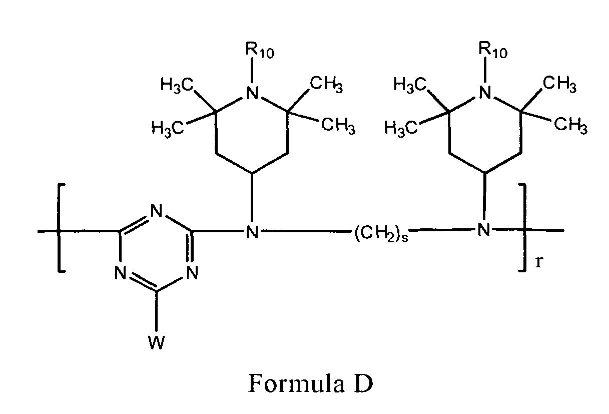 wherein:
r is a number between 2 e 50
s is a number between 2 and 10
R₁₀ is selected in the group consisting of hydrogen and methyl group;
and W is selected in the group consisting of the groups of formulas (VII), (VIII), (IX): 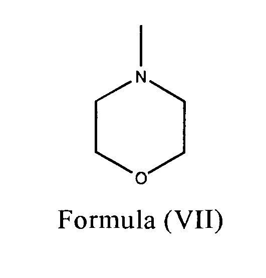 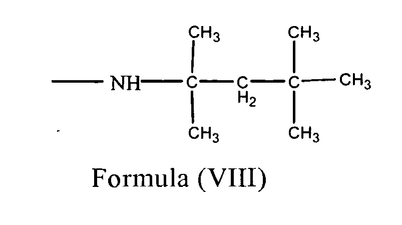 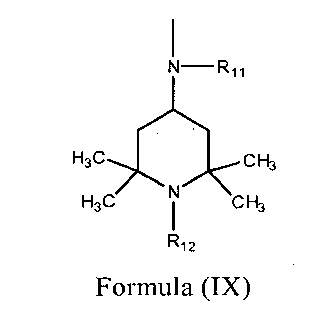 wherein R₁₁ is selected in the group consisting of C₁-C₄ straight-chain and
branched-chain alkyl groups and R₁₂ is H or methyl group; 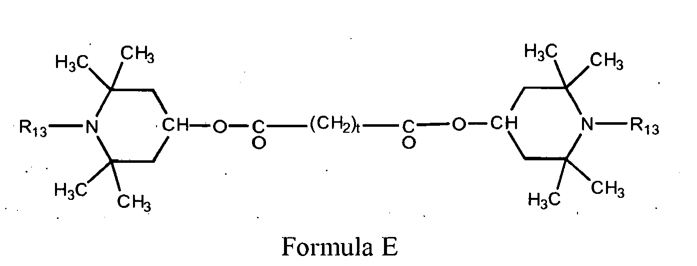 wherein t is a number between 2 e 10 R₁₃ is H or methyl group; 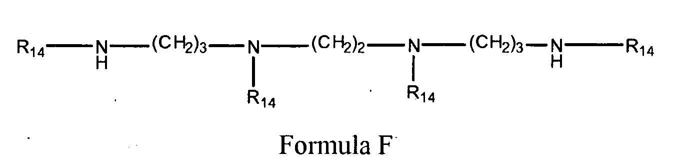 wherein R₁₄ is the group of formula (X) 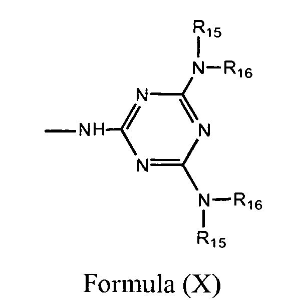 wherein R₁₅ and R₁₆ independently of each other are selected in the group consisting of hydrogen, C₁-C₄ straight-chain and branched-chain alkyl groups and the above defined group of formula (II); 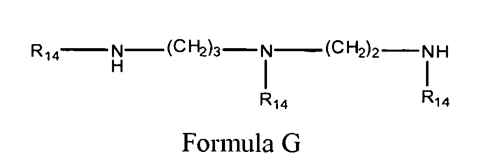 wherein R₁₄ has the meaning defined above for formula F.

It has been observed that the mixtures comprising compounds of formula (I) wherein m=2 and n=3 are those that confer to the polymeric materials a better stability towards photodegradation and the oxidative action of air.

It has also been found that the stability is further improved when R¹ is butyl and a further improvement is obtained if R⁴ in the Pi group is hydrogen.

Further improvements can be obtained by using mixtures comprising the compounds of formula (I) wherein R² and R³ form, together with the nitrogen atom, a morpholine ring.

Still further improvements of the stability of the polymeric materials can be obtained if in the mixtures x is 0 and y is 1 and the end groups are H and even more with the compounds wherein x is 1 and A is NPiR¹ or alternatively if x is 1 and A is NR²R³_{.}

The compounds of formula (I) for the preparation of the mixtures can be obtained by a process consisting in reacting an amine having the following general formula

NH₂-(CH₂)ₙ-NH-(CH₂)ₘ-NH-(CH₂)ₙ-NH₂ (III)

wherein **n** and **m** are as above defined, with a compound having the following general formula 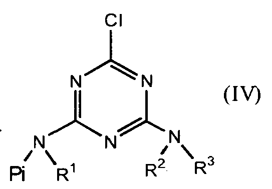 wherein Pi, R¹, R² and R³ are as above defined.

Thus, a HALS of formula (I) is obtained, wherein x=0, y=1 the end groups are hydrogen atoms and m, n Pi, R¹, R² and R³ are as above defined, which can be represented by the following simplified formula:

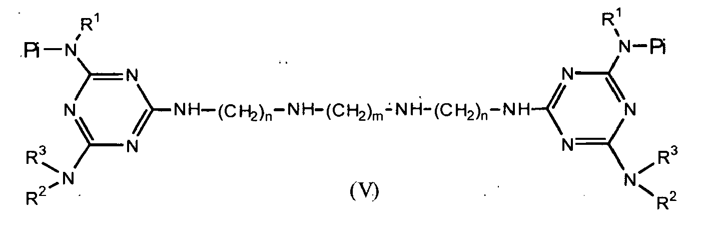

The HALS of formula (V), being an example of the compounds according to formula (I), is capable of conferring to the polymeric materials a high stability against photodegradation and the oxidative action of air.

An alternative to the above described example is to react the compound of formula (V) with compounds having the following formula (VI): 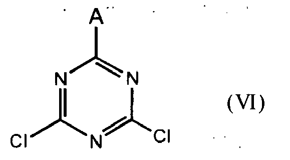 wherein A has the above described meaning.

The HALS of formula (V) can be converted into other products comprised in formula (I), wherein x is 1, y is between 1 and 10 and m, n, Pi, R¹, R² R³ have the above defined meanings.

In the mixtures according to the invention, the end groups of the HALS of formula (I) can be H, OH, OR with R=alkyl or amine group, in particular an amine group derived from formula (V).

The indexes m and n preferably have the meaning of 2 and 3 respectively.

The compounds having formulas B, C, D, E, F, G and their preparations are known. Reference is made to patent publications US 4477615; US 3840494; US3640928; US 4331586; EP 93693; US 4263434; JP 57038589; US 6046304 which describe some examples of preparation of said compounds.

An example of a compound of formula B, which may be used in the mixtures according to the invention, is the product available on the market under the name Uvasorb HA88 (CAS RN= 136504-96-6).

An example of a compound of formula C, which may be used in the mixtures according to the invention, is the product available on the market under the name Uvasorb HA22 (CAS RN= 65447-77-0).

An example of a compound of formula D with X = residue of formula (VII), which may be used in the mixtures according to the invention, is the product available on the market under the name Cyasorb UV-3346 (CAS RN= 82451-48-7).

An example of a compound of formula D with X = residue of formula (VIII), which may be used in the mixtures according to the invention, is the product available on the market under the name Chimassorb 944 (CAS RN= 71878-19-8).

An example of a compound of formula D with X = residue of formula (X), which may be used in the mixtures according to the invention, is the product available on the market under the name Chimassorb 2020 (CAS RN= 192268-64-7).

An example of a compound of formula E with R = H and n=8, which may be used in the mixtures according to the invention, is the product available on the market under the name Uvasorb HA77 (CAS RN= 52829-07-9).

An example of a compound of formula E with R = Methyl and n=8, which may be used in the mixtures according to the invention, is the product available on the market under the name Uvasorb HA29 (CAS RN= 41556-26-7).

An example of a compound of formula F with R = n-butyl and R₁= residue of formula (II) having R₄ = methyl and n=8, which may be used in the mixtures according to the invention, is the product available on the market under the name Chimassorb 119 (CAS RN= 106990-43-6).

The mixtures forming the subject-matter of the present invention can be obtained in any known way, for example (a) by melting together the compounds of formula (I) with the compounds of formula B, C, D, E, F and/or G and by subsequently grinding or granulating the obtained mixture, (b) by dissolving the components in a common solvent and by evaporating the solution to dryness, (c) by incorporating the compounds separately into the polymeric substrate to be stabilized thus obtaining the mixture "in situ" or in the cases where it is possible, (d) by mixing specific starting materials in the same chemical syntheses of the compounds, for instance mixing suitable polyamines in the processes described in US 4477615.

A further object of the invention is the use of mixtures of the compounds of formula (I) with at least one of the compounds of formula B, C, D, E, F, G as polymer stabilizers, in particular for polyolefin polymers.

According to the present invention, the polymers comprise polyethylene, polypropylene, polystyrene, polybutadiene, polyisoprene, and copolymers thereof, polyvinylchloride, polyvinylidene chloride and copolymers thereof, polyvinyl acetate and copolymers thereof, particularly with ethylene; polyesters such as polyethylenterephtalate; polyamides such as Nylon 6 and 6,6; polyurethans.

The mixtures according to the present invention can be incorporated in the polymeric materials with any known method for mixing additives and polymeric materials, for example by means of:
- mixing with the polymer, which can be in form of powder of granulate in a suitable mixer for this purpose;
- adding in the form of a solution or suspension in a suitable solvent and subsequently removing the solvent from the polymer, which can be in the form of powder, granulate or suspension, after complete mixing;
- adding to the polymer during the preparation thereof, for example in the last stage of the preparation.

The mixtures according to the present invention can be added together with other kinds of stabilizers and additives which are generally used in the field, such as antioxidants based on phenols, amines, phosphites; UV absorbers based on benzophenones, benzotriazoles; nickel stabilizers; plastifiers, lubricants, antistatic agents, flame retardants, corrosion inhibitors, metal deactivators, mineral fillers such as titanium bioxide, aluminum oxide and similar.

Some examples of such additives are the following:

### 1. ANTIOXIDANTS

1.1. Alkylated phenols, such as: 2,6-di-tert-butyl-4-methylphenol; 2-tert-butyl-4,6-dimethylphenol; 2,6-di-tert-butyl-4-ethylphenol; 2,6-di-tert-butyl-4-butylphenol; 2,6-di-tert-butyl-4-isobutylphenol; 2,6-di-cyclopentyl-4-methylphenol; 2-(α-methylcyclohexyl)-4,6-dimethylphenol; 2,6-di-octadecyl-4-methylphenol; 2,4,6-tricyclohexylphenol; 2,6-di-tert-butyl-4-(methoxymethyl)phenol; straight-chain or branched-chain nonylphenols, such as 2,6-di-cyclononyl-4-methylphenol; 2,4-dimethyl-6-(1'-methylundecyl)phenol; 2,4-dimethyl-6-(1'-heptadecyl)phenol and mixtures thereof.

1.2. Alkyl-tiomethyl phenols, such as for example 2,4-di-octylthiomethyl-6-tert-butylphenol, 2,4-di-octylthiomethyl-6-methylphenol, 2,4-di-octylthiomethyl-6-ethylphenol, 2,6-di-dodecylthiomethyl-4-nonylphenol.

1.3. Hydrochinones and alkylated hydrochinones, such as for example: 2,6-di-tert-butyl-4-methoxyphenol; 2,5-di-tert-butyl-hydrochinone; 2,5-di-tert-amyl-hydrochinone; 2,6-diphenyl-4-octadeciloxyphenol; 2,6-di-tert-butyl-hydrochinone; 2,5-di-tert-butyl-4-hydroxyanisole; 3,5-di-tert-butyl-4-hydroxyanisole; 3,5-di-ter-butyl-4-hydroxyphenylstearate; bis(3,5-di-tert-butyl-4-hydroxyphenyl)adipate.

1.4. Tocopherols, for example α-tocopherol; γ-tocopherol; β-tocopherol; δ -tocopherol and mixtures thereof (vitamin E).

1.5. Hydroxylated thiodiphenyl ethers, such as 2,2'-thiobis(6-tert-butyl-4-methylphenol); 2,2'-thiobis(4-octylphenol); 4,4'-thiobis(6-tert-butyl-3-methylphenol); 4,4'-thiobis(6-tert-butyl-2-methyl-phenol); 4,4'-bis[2,6-dimethyl-4-hydroxyphenyl] disulfide.

1.6. Alkylidene bisphenols, such as 2,2'-methylene-bis(6-tert-butyl-4-methylphenol); 2,2'-methylene-bis(6-tert-butyl-4-ethylphenol); 2,2'-methylene-bis(4-methyl-6-(α-methylcyclohexyl)phenol); 2,2'-methylene-bis(4-methyl-6-cyclohexylphenol); 2,2'-methylene-bis(6-nonyl-4-methylphenol); 2,2'-methylene-bis-(4,6-di-tert-butylphenol); 2,2'-ethylidene-bis(4,6-di-tert-butylphenol); 2,2'-ethylidene-bis(6-tert-butyl-4-isobutylphenol); 2,2'-methylene-bis(6-(α-methylbenzyl)-4-nonylphenol); 2,2'-methylenebis(6-(α-a-dimethylbenzyl)-4-nonylphenol); 4,4'-methylenebis(2,6-di-tert-butyl-phenol); 4,4'-methylenebis(6-tert-butyl-2-methylphenol); 1,1-bis(5-tert-butyl-4-hydroxy-2-methylphenyl)butane; 2,6-bis(3-tert-butyl-5-methyl-2-hydroxybenzyl)-4-methylphenol; 1,1,3-tris(5-tert-butyl-4-hydroxy-2-methylphenyl)butane; 1,1-bis(5-tert-butyl-4-hydroxy-2-methylphenyl)-3-n-dodecylmercaptobutane; ethylene glycol bis-(3,3-bis-(3'-tert-butyl-4'-hydroxyphenyl)-butyrate); bis(2-(3'-tert-butyl-2'-hydroxy-5'-methylbenzyl)-6-tert-butyl-4-methylphenyl)terephtalate; bis(3-tert-butyl-4-hydroxy-5-methylphenyl)dicyclopentadiene; 1,1-bis(3,5-dimethyl-2-hydroxyphenyl)butane; 2,2-bis-(3,5-di-tert-butyl-4-hydroxyphenyl)propane; 2,2-bis-(5-tert-butyl-4-hydroxy-2-methylphenyl)-4-n-dodecyl-mercaptobutane, 1,1,5,5-tetra-(5-ter-butyl-4-hydroxy-2-methylphenyl)pentane.

1.7. O-, N- and S-benzyl derivates such as: 3,5,3',5'-tetra-ter-butyl-4-4'-dihydroxydibenzyl ether; octadecyl-4-hydroxy-3,5-dimethylbenzyl-mercapto acetate; tridecyl-4-hydroxy-3,5-di-ter-butyl-benzylmercapto acetate; tri(3,5.di-tert-butyl-4-hydroxybenzyl)amine; bis(4-tert-butyl-3-hydroxy-2,6-dimethylbenzyl)dithioterephtalate; bis(3,5-di-tert-butyl-4-hydroxybenzyl)disulphide; isooctyl-3,5-di-tert-butyl-4-hydroxybenzylmercaptoacetate.

1.8. Malonates containing the hydroxybenzyl groups such as; dioctadecyl-2,-2,2-bis(3,5-di-tert-butyl-2-hydroxybenzyl)malonate; dioctadecyl-2,- (3 -tert-butyl-4-hydroxy-5-methylbenzyl)malonate; di-dodecylmercaptoethyl-2,2'-bis-(3,5-di-tert-butyl-4-hydroxybenzyl)malonate; bis-(4-(1,1,3,3-tetramethylbutyl)-phenyl)-2,2-bis-(3,5-di-tert-butyl-4-hydroxybenzyl)malonate.

1.9. Hydroxybenzyl aromatic compounds, such as 1,3,5-tris-(3,5-di-tert-butyl-4-hydroxybenzyl)-2,4,6-trimethylbenzene; 1,4-bis(3,5-di-tert-butyl-4-hydroxybenzyl)-2,3,5,6-tetramethylbenzene; 2,4,6-tris-(3,5-di-tert-butyl-4-hydroxybenzyl)-phenol.

1.10. Triazine derivates, such as 2,4-bis(octylmercapto)-6-(3,5-di-tert-butyl-4-hydroxyanilino)-1,3,5-triazine; 2-octylmercapto-4,6-bis(3,5-di-tert-butyl-4-hydroxyanilino)-1,3,5-triazine; 2-octylmercapto-4,6-bis(3,5-di-tert-butyl-4-hydroxyphenoxy)-1,3,5-triazine; 2,4,6-tris(3,5-di-tert-butyl-4-hydroxyphenoxy)-1,3,5-triazine; 1,3,5-tris(3,5-di-tert-butyl-4-hydroxybenzyl)-isocyanurate; 1,3,5-tris-(4-tert-butyl-3-hydroxy-2,6-dimethylbenzyl)isocyanurate; 2,4,6-tris(3,5-di-tert-butyl-4-hydroxyphenylethyl)-1,3,5-triazine; 1,3,5-tris-(3,5-di-tert-butyl-4-hydroxyphenylpropionyl)hexahydro-1,3,5-triazine; 1,3,5-tris-(3,5-dicyclohexyl-4-hydroxyb enzyl)isocyanurate.

1.11. Benzylphosphonates, such as for example: dimethyl-2,5-di-tert-butyl-4-hydroxybenzylphosphonate; diethyl-3,5-di-tert-butyl-4-hydroxybenzylphosphonate; dioctadecyl-3,5-di-tert-butyl-4-hydroxybenzylphosphonate; dioctadecyl-5-ter-butyl-4-hydroxy-3-methylbenzylphosphonate; calcium salt of the monoethylic ester of 3,5-di-tert-butyl-4-hydroxybenzylphosphonic acid.

1.12. Acylamino phenols such as lauric acid 4-hydroxyanilide, stearic acid 4-hydroxyanilide, octil N-(3,5-di-tert-butyl-4-hydroxyphenyl)carbamate.

1.13. β-(3,5-di-tert-butyl-4-hydroxyphenyl)propionic acid esters with mono- or polyhydric alcohols such as; methanol, ethanol, n-octanol, iso-octanol, octadecanol; 1,6-esandiol, 1,9-nonadiol, ethylenic glycol, 1,2-propandiol, neopentyl glycol, thiodiethylene glycol, diethylene glycol, triethylene glycol, pentaerithrol, tri-(hydroxyethyl)isocyanurate; N,N'-bis(hydroxyethyl)oxamide; 3-thioundecanol; 3-thiopentadecanol; trimethyl hexanediol; trimethylolpropane; 4-hydroxymethyl-1-phospho-2,6,7-trioxabicyclo(2,2,2)octane.

1.14. β-(5-tert-butyl-4-hydroxy-3-methylphenyl)propionic acid esters with mono- or polyhydric alcohols such as; methanol, ethanol, n-octanol, iso-octanol, octadecanol; 1,6-esandiol, 1,9-nonadiol, ethylenic glycol, 1,2-propandiol, neopentyl glycol, thiodiethylene glycol, diethylene glycol, triethylene glycol, pentaerithrol, tri-(hydroxyethyl)isocyanurate; N,N'-bis(hydroxyethyl)oxamide; 3-thioundecanol; 3-thiopentadecanol; trimethyl hexanediol; trimethylolpropane; 4-hydroxymethyl-1-phospho-2,6,7-trioxabicyclo(2,2,2)octane.

1.15. β-(3,5-dicyclohexyl-4-hydroxyphenyl)propionic acid esters with mono-or polyhydric alcohols such as; methanol, ethanol, n-octanol, iso-octanol, octadecanol; 1,6-esandiol, 1,9-nonadiol, ethylenic glycol, 1,2-propandiol, neopentyl glycol, thiodiethylene glycol, diethylene glycol, triethylene glycol, pentaerithrol, tri-(hydroxyethyl)isocyanurate; N,N'-bis(hydroxyethyl)oxamide; 3-thioundecanol; 3-thiopentadecanol; trimethyl hexanediol; trimethylolpropane; 4-hydroxymethyl-1-phospho-2,6,7-trioxabicyclo(2,2,2)octane.

1.16. 3,5,-di-tert-butyl-4-hydroxyphenyl acetic acid esters with mono- or polyhydric alcohols such as; methanol, ethanol, n-octanol, iso-octanol, octadecanol; 1,6-esandiol, 1,9-nonadiol, ethylenic glycol, 1,2-propandiol, neopentyl glycol, thiodiethylene glycol, diethylene glycol, triethylene glycol, pentaerithrol, tri-(hydroxyethyl)isocyanurate; N,N'-bis(hydroxyethyl)oxamide; 3-thioundecanol; 3-thiopentadecanol; trimethyl hexanediol; trimethylolpropane; 4-hydroxymethyl-1-phospho-2,6,7-trioxabicyclo(2,2,2)octane.

1.17. β-(3,5-di-tert-butylphenyl)bropionic acid amides such as: N,N'-bis(3,5-di-tert-butyl-4-hydroxyphenylpropionil)-hexamethylene diamide; N,N'-bis-(3,5-di-tert-butyl-4-hydroxyphenylpropionyl)-trimethylendiamide; N,N'-bis-(3,5-di-tert-butyl-4-hydroxyphenylpropionyl)hydrazide; N,N'-bis(2-(3-(3,5-di-tert-butyl-4-hydroxyphenyl)propionyloxy)ethyl)-oxamide.

### 1.18. Ascorbic acid (Vitamin C).

1.19. Amine antioxidants such as: N,N'-diisopropyl-p-phenylenediamine; N,N'-di-sec-butyl-p-phenylenediamine; N,N'-bis(1,4-dimethyl-pentyl)-p-phenylenediamine; N,N'-bis(1-ethyl-3-methylpentyl)-p-phenylenediamine; N,N'-bis(1-methylheptyl)-p-phenylenediamine; N,N'-dicyclohexyl-p-phenylenediamine; N,N'-diphenyl-p-phenylenediamine; N,N'-bis-(2-naphtyl)-p-phenylenediamine; N-isopropyl-N'-phenyl-p-phenylenediamine; N-(1,3-dimethyl-butyl)-N'-phenyl-p-phenylenediamine; N-1-methylheptyl)-N'-phenyl-p-phenylenediamine; N-cyclohexyl-N'-phenyl-p-phenylenediamine; 4-(p-toluensulfamoyl)-diphenylamine; N,N'-dimethyl-N,N'-di-sec-butyl-p-phenylendimine; diphenylamine; N-allyl-diphenylamine; 4-isopropoxy-diphenylamine; N-phenyl-1-naphtylamine; N-(4-ter-octylphenyl)-1-naphtylamine; N-phenyl-2-naphtylamine; p,p'-di-ter-octyldiphenylamine; 4-n-butyl-aminophenol; 4-butyryl-aminohenol; 4-nonanoylaminophenol; 4-dodecanoyl-aminophenol; 4-octadecanoyl- aminophenol; bis(4-methoxyphenyl)amine; 2,6-di-ter-butyl-4-dimethylaminomethylphenol; 2,4'-diaminodiphenylmethane; 4,4'-diaminodiphenylmethane; N,N,N',N'-tetramethyl-4,4'-diaminodiphenylmethane; 1,2-bis-((2-methylphenyl)amino)ethane; 1,2-bis-(phenylamino)propane; o-tolil-biguanide; bis-(4-(1',3'-dimethylbutyl)phenyl)amine); ter-octyl-N-phenyl-1-naphtylamine; mixtures of dialkylated tert-butyl/tert-octyl-diphenylamines; mixtures of mono- and di-alkyl nonyldiphenylamines; mixtures of mono- and di-alkyl dodecyldiphenylamines; mixtures of mono- and di-alkyl isopropyl/isohexyldiphenylamines; mixtures of mono- and di-alkyl terbutyldiphenylamines; 2,3,dihydro-3,3-dimethyl-4H-1,4-benzothiazine; phenothiazine; mixtures of mono- and di-alkyl tert-butyl/tert-octylphenothiazine; mixtures of mono- and di-alkyl tert-octyl phenothiazine; N-allyl phenothiazine; N,N,N',N'-tetraphenyl-1,4-diamino-2-butene; N,N'-bis-(2,2,6,6-tetramethyl-piperidinyl-4-hexamethylenediamine; bis(2,2,6,6- tetramethyl-piperid -4-yl)sebacate; 2,2,6,6-tetramethyl-piperid -4-one; 2,2,6,6- tetramethyl-piperid -4-ol.

### 2. UV ADSORBERS AND LIGHT STABILIZERS

2.1. 2-(2'-hydroxyphenyl)benzotriazoles, such as: 2-(2'- hydroxy-5-methylphenyl)benzotriazole; 2-(3',5'-di-tert-butyl-2'-hydroxyphenyl)benzotriazole; 2-(5'-tere-butyl-2'- hydroxyphenyl)benzotriazole; 2-(2'-hydroxy-5'-(1,1,3,3-tetramethylbutyl)phenyl)benzotriazole; 2-(3',5'-di-tert-butyl-2'- hydroxyphenyl)-5-chlorobenzotriazole; 2-(3'-tert-butyl-2'-hydroxy-5'-methylphenyl)-5-chloro-benzotriazole; 2-(3'-sec-butyl-5'-tert-butyl-2'- hydroxyphenyl)benzotriazole; 2-(2'-hydroxy-4'-octyloxyphenyl)benzotriazole; 2-(3',5'-di-tert-amil-2'-hydroxyphenyl)-benzotriazole; 2-(3',5'-bis-(α-α,-dimethylbenzyl)-2'- hydroxyphenyl)benzotriazole; 2-(3'-tert-butyl-5'-(2-(2-ethylhexyloxy)-carbonylethyl)-2'- hydroxyphenyl)-5-chloro-benzotriazole; 2-(3'-tert-butyl-2'-hydroxy-5'-(2-octyloxycarbonylethyl)phenyl)-5-chloro-benzotriazole; 2-(3'-tert-butyl-2'-hydroxy-5'-(2-methoxycarbonylethyl)phenyl)-5-chloro-benzotriazole; 2-(3'-tert-butyl-2'-hydroxy-5'-(2-methoxycarbonyl-ethyl)phenyl)-benzotriazole; 2-(3'-tert-butyl-2'-hydroxy-5'-(2-octyloxycarbonyl-ethyl)phenyl)-benzotriazole; 2-(3'-tert-butyl-5'-(2-(2-ethylhexyloxy)-carbonylethyl)-2'- hydroxyphenyl)-benzotriazole; 2-(3'-dodecyl-2'-hydroxy-5'-methylphenyl)-benzotriazole; 2-(3'-tert-butyl-2'-hydroxy-5'-(2-isooctyloxycarbonylethyl)-phenyl-benzotriazole; 2,2'-methylene-bis-(4-(1,1,3,3-tetramethylbutyl)-6-benzotriazol-2-ylphenol); the transesterification product of 2-(3'-tert-butyl-5'-(2-methoxycarbonylethyl)-2'- hydroxyphenyl)-2H-benzotriazole with polyethylenglycole 300; (R-CH₂-CH₂-COO-CH₂-CH₂-)₂-wherein R can be: 3'-tert-butyl-4'-hydroxy-5'-2H-benzotriazole-2-ylphenyl; 2-(2'-hydroxy-3'-(α,α-dimethylbenzyl)-5'-(1,1,3,3-tetramethylbutyl)-phenyl)benzotriazole; 2-(2'-hydroxy-3'-(1,1,3,3-tetramethylbutyl)-5'-(α,α-dimethylbenzyl) phenyl)benzotriazole.

2.2. 2-hydroxybenzophenones such as for example the 4-hydroxy-; 4-methoxy-; 4-octyloxy-; 4-decyloxy-; 4-dodecyloxy-; 4-benzyloxy-; 4,2',4'-tri-hydroxy- and 2'-hydroxy-4,4'-dimethoxy derivates.

2.3. Esters of substituted and non-substituted benzoic acids, such as for example: 4-tertbutyl-phenyl-salicylate; phenyl salicylate; octylphenyl salicylate; dibenzoyl resorcinol; bis-(4-tert-butyl-benzoyl)-resorcinol; benzoyl resorcinol; 2,4-di-tert-butylphenyl 3,5-di-tert-butyl-4-hydroxybenzoate; hexadecyl 3,5-di-tert-butyl-4-hydroxybenzoate; octadecyl 3,5-di-tert-butyl-4-hydroxy-benzoate; 2-methyl-4,6-di-tert-butylphenyl 3,5-di-tert-butil-4-hydroxybenzoate:

2.4. Acrilates, such as for example: ethyl α-cyano-β,β-diphenylacrilate; isooctyl α-cyano-β,β-diphenylacrilate; methyl α-carbomethoxycinnamate; methyl α -cyano-β-methyl-p-methoxy-cinnamate; butyl α -cyano-β-methyl-p-methoxycinnamate; methyl α-carbomethoxy-p-methoxycinnamate e N-β-carbomethoxy-β-cyanovinyl)-2-methylindoline.

2.5. Nickel derivates such as for example: nickel complexes 1:1 or 1:2 with 2,2'-thio-bis-(4-(1,1,3,3-tetramethylbutyl)phenol, with or without ligands such as n-butylamine, triethanolamine or N-cyclohexyldiethanolamine; nickel dibutyldithiocarbamate; nickel salts of mono-alkyl esters (for example methyl or ethyl esters) of 4-hydroxy-3,5-di-tert-butylbenzylfosfonic acid; nickel complexes of keto-oximes, for example of 2-hydroxy-4-methylphenyl undecyl-keto-oxime; nickel complexes of 1-phenyl-4-lauroyl-5-hydroxy-pyrazole, with or without additional ligands.

2.6. Oxamides, such as for example: 4,4'-dioctyloxy-oxalanilide; 2,2'-diethoxy- oxalanilide; 2,2'-dioctyloxy-5,5'-di-tert-butyl- oxalanilide; 2,2'-didodecyloxy-5,5'-di-tert-butyl- oxalanilide; 2-ethoxy-2'-ethyloxy- oxalanilide; N,N'-bis(3-dimethylaminopropyl) oxalanilide; 2-ethoxy-2'-ethyl-5,4'-di-tert-butyl-oxalanilide; mixtures of o- and p- disubstituted methoxy oxalanilides and mixtures of o-and p- disubstituted ethoxy oxalanilides.

2.7. 2-(2-hydroxyphenyll)-1,3,5-triazines, such as for example: 2,4,6-tris(2-hydroxy-4-octylooxyphenyl)-1,3,5-triazine; 2-(2-hydroxy-4-octyloxyphenyl)-4,6-bis(2,4-dimethylphenyl)-1,3,5-triazine; 2,4-bis(2-hydroxy-4-propyloxyphenyl)-6-(2,4-dimethylphenyl)-1,3,5-triazine; 2-(2-hydroxy-4-octyloxyphenyl)-4,6-bis-(4-methylphenyl)-1,3,5-triazine; 2-(2-hydroxy-4-dodecyloxyphenyl)-4,6-bis-(2-4-dimethylphenyl)-1,3,5-triazine; 2-(2-hydroxy-4-tridecyloxyphenyl)-4,6-bis-(2-4-dimethylphenyl)-1,3,5-triazine; 2-(2-hydroxy-4-(2-hydroxy-3-butyloxy-propoxy)phenyl)-4,6-bis(2,4-dimethyl)-1,3,5-triazine; 2-(2-hydroxy-4-(2-hydroxy-3-octyloxy-propoxy)-phenyl)-4,6-bis(2,4-dimethyl)-1,3,5-triazine; 2-(4-(dodecyloxy/tridecyloxy-2-hydroxypropoxy)-2-hydroxyphenyl)-4,6-bis(2,4-dimethylphenyl)-1,3,5 -triazine; 2-(2-hydroxy-4-(2-hydroxy-3-dodecyloxy-propoxy)phenyl)-4,6-bis(2,4-dimethylphenyl)-1,3,5-triazine; 2-(2-hydroxy-4-hexyloxy)phenyl-4,6-diphenyl-1,3,5-triazine; 2-(2-hydroxy-4-methoxyphenyl)-4,6-diphenyl-1,3,5-triazine; 2,4,6-tris(2-hydroxy-4-(3-butoxy-2-hydroxy-propoxy)phenyl-1,3,5-triazine; 2-(2-hydroxyphenyl)-4-(4-methoxyphenyl)-6-phenyl-1,3,5-triazine; 2-(2-hydroxy-4-(3-(2-ethylhexyl-1-oxy)-2-hydroxypropyloxy)phenyl)-4,6-bis(2,4-dimethylphenyl)-1,3,5-triazine.

3. Metal deactivator, such as for example : N,N'-diphenyloxamide; N-salicyilal-N'-salicyloyl-hydrazine; N,N'-bis(salicyloyl)hydrazine; N,N'-bis(3,5-di-tert-butyl-4-hydroxyphenylpropionyl)hydrazine; 3-salicyloylamino-1,2,4-triazole; bis(benzylidene)oxalyl dihydrazide; oxalanilide; isoftaloyl dihydrazide; sebacoyl bisphenyhydrazide; N,N'-diacetyladipoyl dihydrazide; N,N'-bis(salicyloyl)oxalyl dihydrazide; N,N'-bis(salicyloyl)thiopropionyl dihydrazide.

4. Phosphites and phosphonites such as for example: triphenyl phosphite; diphenyl alkyl phosphites; phenyl dialkyl phosphites; tris(nonylphenyl)phosphite; trilauryl phosphite; trioctadecyl phosphite; distearyl pentaerythritol diphosphite; tris(2,4-di-tert-butyl-phenyl) phosphite; diisodecyl pentaerythritol diphosphite; bis(2,4-di-tert-butylphenyl) phosphite; diisodecyl pentaerythritol diphosphite; bis(2,4-di-tert-butylphenyl) pentaerythritol diphosphite; bis(2,6-di-tert-butyl-4-methylphenyl)-pentaerythritol diphosphite; diisodecyloxy-pentaerythritol diphosphite; bis-(2,4-di-tert-butyl-6-methylphenyl)pentaerythritol diphosphite; bis(2,4,6-tris(ter-butylphenyl)pentaerythritol diphosphite; tristearyl sorbitol triphosphite; bis(2,4-di-tert-butyl-6-methylphenyl) methyl phosphite; bis(2,4-di-tert-butyl-6-methylphenyl) ethyl phosphite; 2,2',2"-nitrilo(triethyltris(3,3',5,5'-tetra-tert-butyl-1,1'-biphenyl-2,2'-idyl) phosphite); 2-ethylhexyl (3,3',5,5'-tetra-tert-butyl-1,1'-biphenyl-2,2'-idyl) phosphite); tetra(2,4-di-tert-butylphenyl) 4-4'-biphenylene diphosphonite.

5. Hydroxylamines such as for example: N,N-dibenzylhydroxylamine; N,N-diethylhydroxylamine; N,N-dioctylhydroxylamine; N,N-dilaurylhydroxyl-amine; N,N-ditetradecylhydroxylamine; N,N-dihexadecylhydroxylamine; N,N-dioctadecylhydroxylamine; N-hexadecyl-N-octadecylhydroxylamine; N-heptadecyl-N-octadecylhydroxylamine; N,N-dialkylhydroxylamines derived from the hydrogenated tallow amines.

6. Nitrones , for example: N-benzyl-alfa-phenyl-nitrone; N-ethyl-alfa-methyl-nitrone; N-octyl-alfa-eptyl-nitrone; N-lauryl-alfa-undecyl-nitrone; N-tetradecyl-alfa-tridecyl-nitrone; N-hexadecyl-alfa-pentadecyl-nitrone; N-octadecyl-alfa-pentadecyl-nitrone; N-heptadecyl-alfa-heptadecyl-nitrone; N-octadecyl-alfa-hexadecyl-nitrone; nitrones derived from N,N-dialkylhydroxylamines obtained from amines of hydrogenated tallow.

7. Thiosynergic derivates, for example dilauryl thiodipropionate or stearyl thiodipropionate.

8. Antiperoxide agents such as for example esters of the thiodipropionic acid with lauryl, stearyl, miristic or tridecyl alcohols; mercaptobenzimidazole or 2-mercaptobenzimidazole zinc salt; zinc dibutyldithiocarbamate; dioctadecyl disulphide; pentaerythritol tetrakis(β-dodecylmercapto)propionate.

9. Polyamide stabilizers for example copper salts in combination with iodides and/or phosphorated compounds and bivalent manganese salts.

10. Basic co-stabilizers for example: melamine; polyvinylpolypyrrolidone; dicyandiamide; triallylcyanurate; urea derivates; hydrazine derivates; amines; polyamides; polyurethans; alkaline metal and alkaline-earth metal salts of long-chain fatty acids such as calcium stearate, zinc stearate, magnesium behenate, magnesium stearate, sodium ricinoleate, potassium palmitate, pyrocathecol antimonium or zinc salts.

11. Nucleating agents for example: inorganic substances such as talc; metal oxides such as titanium dioxide or magnesium oxide; phosphates, carbonates or sulphates of earth-alkaline metal salts; organic compounds such as mono or polycarboxylic acids and salts thereof, such as 4-ter-butylbenzoic acid, adipic acid, diphenylacetic acid, sodium succinate; sodium benzoate; polymeric compounds such as anionic copolymers.

12. Benzofuranones and indolinones such as for example the ones described in USP 4,325,863; USP 4,338,244; USP 5,175,312; USP 5,216,052; USP 5,252,643; DE-A-4316611; DE-A-4316622; DE-A-4316876; EP-A-0589839; EP-A-0591102; 3-(4-(2-acetoethoxy)phenyl)-5,7-di-ter-butyl-benzofuran-2-one; 5,7-di-ter-butyl-3-(4-(2-stearoyloxyethoxy)phenyl)benzofuran-2-one; 3,3'-bis(5,7-di-ter-butyl-3-(4-(2-hydroxyethoxy)phenyl)benzofuran-2-one); 5,7-di-ter-butyl-3-(4-ethoxyphenyl)benzofuran-2-one; 3-(4-acetoxy-3,5-dimethylphenyl)-5,7-di-ter-butyl-benzofuran-2-one; 3-(3,5-dimethyl-4-pivaloyloxyphenyl)-5,7-di-ter-butyl-benzofuran-2-one; 3-(2,3-di-methylphenyl)-5,7-di-ter-butyl-benzofuran-2-one.

13. Fillers and reinforcing agents for example: calcium carbonate; silicates; glass fibers; asbestos; talc; kaolin; mica; barium sulphate; metal oxides and hydroxides, carbon black; graphite; wood flour or fiber or other natural products; synthetic fibers.

14. Other additives for example plastifiers, lubricants, emulsifiers, pigments, rheology modifiers; catalysts; flow control agents; optical bleach; antiflame agents; antistatic agents, swelling agents.

The quantity of mixture according to the present invention which is necessary for an efficient stabilization of the polymeric materials depends on various factors, such as the kind and the features of the polymeric material to be stabilized, the use for which said material is intended, the intensity of the radiations and the period of the foreseen exposure.

Generally a quantity between 0,01 and 5% by weight with respect to the polymer, preferably between 0,1 and 1,0% is enough.

The following preparative and applicative examples illustrate the invention in detail.

### Example 1

A HALS formed of a mixture of oligomers of formula (I) with x =1, y=1-10, m=2, n=3, R¹=n-butyl, Pi=2,2,6,6-tetramethyl-4-piperidine residue, NR²R³ - morpholine residue and A=N-(2,2,6,6-tetramethyl-4-piperidinyl)-butylammine residue was prepared according to the following procedure:

### Synthesis of intermediate 1

0,2 moles of cyanuric chloride were solved in 240 ml of xylene. After cooling to 10°C, 0,2 moles of N-(2,2,6,6-tetramethyl-4-piperidinyl)-butylamine were added in 30 minutes under stirring, maintaining the temperature between 10°C and 15°C. Then, 46 g of water and 0,216 moles of sodium hydroxide as 30% aqueous solution were added. The solution was heated under stirring up to 60°C, maintaining this temperature for 30', then the aqueous phase was removed. The solution was cooled to 0°C and 0,2 moles of morpholine were dripped in 30', by maintaining the temperature between 0 and 5°C. At the end of the addition the mixture was heated at 70-80°C and after 30' stirring, 46 g of water and 0,216 moles of sodium hydroxide were added as 30% water solution. After 30' at 85°C stirring was interrupted and the water phase was removed.

The obtained xylene solution, containing 0,2 moles of a compound of general formula (IV) with R¹=n-butyl, Pi= 2,2,6,6-tetramethyl-4-piperidine residue, NR²R³ = morpholine residue, was additioned with 0,1 moles of N,N'-bis(aminopropyl)-ethylendiamine, corresponding to an amine having general formula (II) with m=2 and n=3; the acidity was neutralized with the equivalent quantity of alkali and the solution was boiled, while the formed water was removed by distillation. After all the water was collected, the distillation was continued thus gradually reaching 140°C in the boiler and by collecting about 110 ml of xylene in three hours. Cooling to 80°C was performed, 120 ml of water were added and after 30' stirring at 80-90°C the water phase was discharged.

Thus, 241 g of a xylene solution of a HALS described by formula (V) with m=2, n=3, x=0, R¹=n-butyl, Pi= 2,2,6,6-tetramethyl-4-piperidine residue and NR²R³ morpholine residue were obtained.

### Synthesis of intermediate 2

In a reactor were dropped, at the temperature of 15-20°C, 0,08 moles of N-(2,2,6,6-tetramethyl-4-piperidinyl)-butylamine in a solution of 0,08 moles of cyanuryl chloride in 156 ml of xylene. After neutralization with the equivalent amount of alkali, the water phase was remove, thus obtaining a xylene solution of 0,08 moles of a compound of formula VI with A = N-(2,2,6,6-tetramethyl-4-piperidinyl)-butylamine residue.

### Final Synthesis

The two solutions of intermediate 1 and intermediate 2 were brought together and the resulting mixture was heated to reflux for 5 hours in the presence of 0,17 moles of 30% sodium hydroxide, thus removing the reaction water by distillation.

The solution was then cooled to 80°C, washed with 140 ml of distilled water and, after filtration to remove possible undissolved parts, was dried by distillation of the solvent under vacuum, thus obtaining, by cooling the melt, 115 g of solid product (HALS 1).

In the following applicative examples, the codes HALS2 and HALS3 refer to the compounds having the formulas given below:

HALS2: compound of formula (B) wherein R₆ = 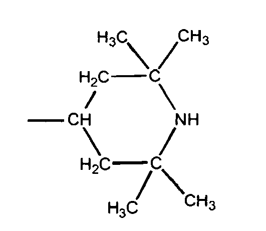 R₇ = n-butyl
p = 2-5;
HALS3: compound of formula (C) wherein R₈ = H, R₉ = CH₂-CH₂, q = 10-15;
All the quantities, where not explicitly indicated, are by weight.

### Applicative example 1

Light stabilization of a polypropylene multifilament yarn

1000 parts by weight of powder unstabilized polypropylene homopolymer (fluidity index: about 10-12 g/10' at 230°C- 2,16 kPa) were mixed in a laboratory mixer with 1 parts of Calcium stearate, 0,5 parts by weight of tris-(2,4-di-tert-butylphenyl)phosphite, 0,50 parts by weight of 1,3,5-tris(3,5-di-tert-butyl-4-hydroxybenzyl)isocyanurate and 1,5 parts by weight of stabilizers HALS 1, 2 or 3 as indicated in the following Table 1.

The dry mixture was extruded in a lab extruder at 230°C and granulated.

The granulate was transformed in multifilament yarn having title 480/60 dtex (stretch ratio 1:3) by spinning, by using a lab extruder at 260°C and stretch ratio 1:3.

The yarn was exposed in a Weather-Ometer (WOM Ci65) according to ISO 4892. The light resistance was studied by periodically taking treated samples and by subjecting them to tensile strength tests by checking breaking load. The parameter to compare the light resistance of the samples was t₅₀ defined as "exposure time in WOM, expressed in hours, for a breaking load equal to 50% of the initial value".

The experimental results are shown in Table 1.

**Table 1. Light stability of multifilament yarn PP 480/60 dtex**

| **Stabilization** | **t₅₀ WOM hours** |
|---|---|
| Without light stabilizer | 300 |
| 0.15% HALS 1 | 1410 |
| 0.15% HALS 2 | 1760 |
| 0.15% HALS 3 | 1190 |
| 0.075% HALS 1 | |
| + | |
| 0.075% HALS 2 | 1650 |
| 0.075% HALS 1 | |
| + | |
| 0.075% HALS 3 | 1360 |

### Applicative example 2

Light stabilization of high-density polyethylene plaques

1000 parts by weight of high density polyethylene (fluidity index: about 6-8 g/10' at 190°C- 2,16 kPa) were mixed in a laboratory mixer with 1 part by weight of stabilizers HALS 1, 2 or 3 as indicated in the following Table 2.

The dry mixture was extruded in a lab extruder at 230°C and granulated.

The granulate was transformed in plaques having a thickness of 2 mm by means of injection molding at 230°C. Dumb-dell specimen, which were die cut from the plaques, were exposed in Wheather-Ometer (WOM Ci35A) according to ISO 4892.

Light resistance was followed by periodically taking the specimens and subjecting them to tensile strength tests by checking elongation to break.

To compare the light resistance of the specimens the parameter was t₅₀ defined as "exposure time in WOM, expressed in hours, necessary for reaching an elongation to break of 50% of the initial value".

The experimental results are shown in Table 2.

**Table 2. Light stability of dumb-bell specimen having thickness of 2 mm**

| **Stabilization** | **t₅₀ WOM hours** |
|---|---|
| Without light stabilizer | 170 |
| 0.10% HALS 1 | 4000 |
| 0.10% HALS 2 | 4740 |
| 0.10% HALS 3 | 3715 |
| 0.05% HALS 1 | |
| + | |
| 0.05% HALS 2 | 4500 |
| 0.05% HALS 1 | |
| + | |
| 0.05% HALS 3 | 3940 |

### Applicative example 3

Light stabilization of low density polyethylene films

1000 parts by weight of low density polyethylene (fluidity index: about 0,6-0,8 g/10' at 190°C- 2,16 kPa) were mixed in a laboratory mixer with 0,30 parts of n-octadecyl-3-(3',5'-di-tert-butyl-4-hydroxyphenyl)-propionate and 1,50 parts by weight of stabilizers HALS 1, 2 or 3 and their mixtures as indicated in the following Table 3.

The dry mixture was extruded in a lab extruder at 230°C and granulated.

The granulate was transformed in film having final thickness of about 150 µm by means of bubble extrusion with a lab extruder provided with rotating head, at a maximum temperature of 230°C.

Specimens taken from the above film, after being mounted on suitable supports, were exposed in a Weather-Ometer (WOM Ci35a) according to ISO 4892.

The light resistance was studied by periodically taking the treated specimens and by subj ecting them to tensile strength tests by checking the elongation to break.

The parameter to compare the light resistance of the samples was t₅₀ defined as "exposure time in WOM, expressed in hours, necessary for reaching a break elongation of 50% of the initial value".

The experimental results are shown in Table 3.

**Table 3. Light stability of blown film LDPE having thickness 150 µm**

| **Stabilization** | **t₅₀ WOM hours** |
|---|---|
| Without light stabilizer | 600 |
| 0.15% HALS 1 | 3900 |
| 0.15% HALS 2 | 4300 |
| 0.15% HALS 3 | 2600 |
| 0.075% HALS 1 | |
| + | |
| 0.075% HALS 2 | 4240 |
| 0.075% HALS 1 | |
| + | |
| 0.075% HALS 3 | 3420 |

## Claims

1. Light stabilizer mixture, comprising:
- 10% to 90% by weight of oligomers of Formula (I) 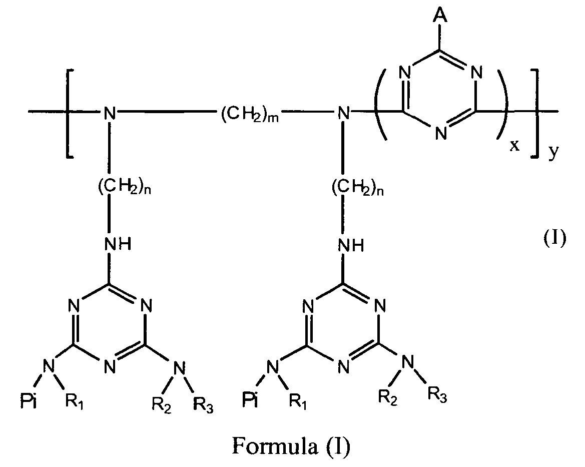 wherein x is 0 or 1;
y is comprised between 1 and 10;
m and n, independently of each other, are numbers between 2 and 8;
R₁ is selected in the group consisting of H and C₁-C₄ straight-chain and branched-chain alkyl group;
R₂ and R₃, independently of each other, are selected in the group consisting of H, C₁-C₈ straight-chain and branched-chain alkyl groups, cyclic alkyl group having from 5 to 12 carbon atoms, or form together with the nitrogen atom a heterocyclic ring having from 5 to 7 members, comprising other heteroatoms such as O;
A represents a NPiR₁ group or a NR₂R₃ group;
wherein Pi represents the group of formula (II) 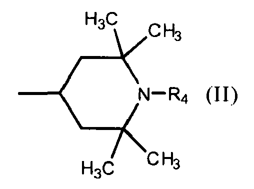 wherein R₄ is selected in the group consisting of H, C₁-C₄ straight-chain and branched-chain alkyl groups, and OR₅ groups, wherein R₅ is selected in the group consisting of H, C₁-C₈ straight-chain or branched-chain alkyl group;
and wherein the group NPiR is different from the group NR₂R₃; and
- at least one compound selected among those of formulas B, C, D, E, F or G: 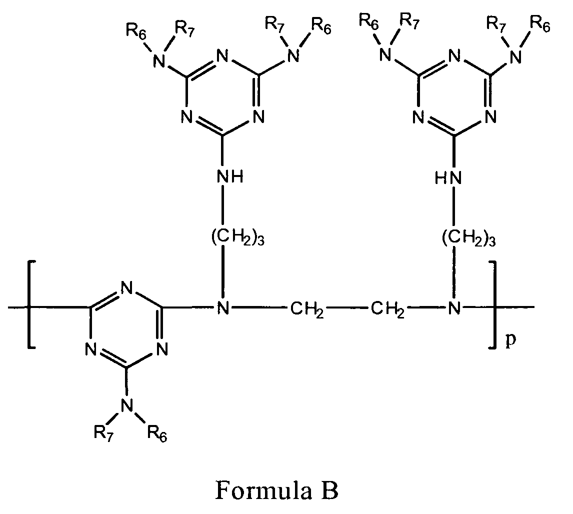 wherein:
R₆ means: 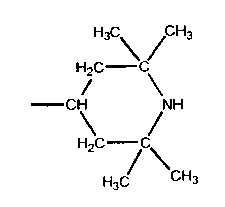 or: 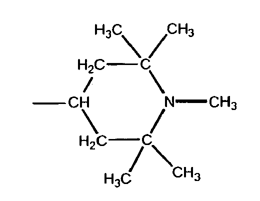
R₇ is selected in the group consisting of H and straight-chain and branched-chain C₁-C₄ groups;
p is a number between 2 and 10; 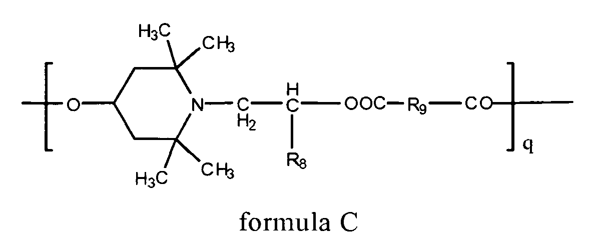
wherein:
R₈ is selected in the group consisting of H and methyl group;
R₉ is a direct bond or is selected in the group consisting of C₁-C₁₀ alkylene groups;
q is a number between 2 and 50; 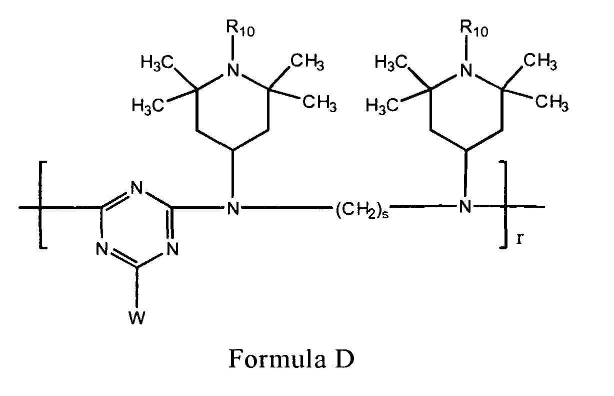
wherein:
r is a number between 2 and 50;
s is a number between 2 and 10;
R₁₀ is selected in the group consisting of H and methyl group;
and W is selected in the group consisting of the following groups of formulas (VII), (VIII), (IX): 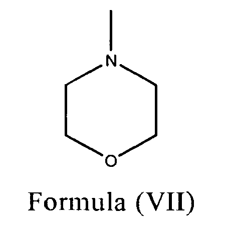 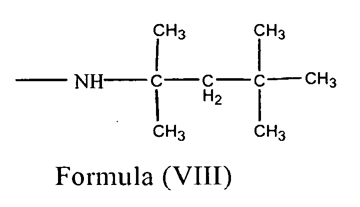 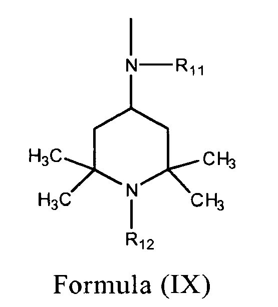 wherein R₁₁ is selected in the group consisting of C₁-C₄ straight-chain and branched-chain alkyl groups and R₁₂ is H or methyl; 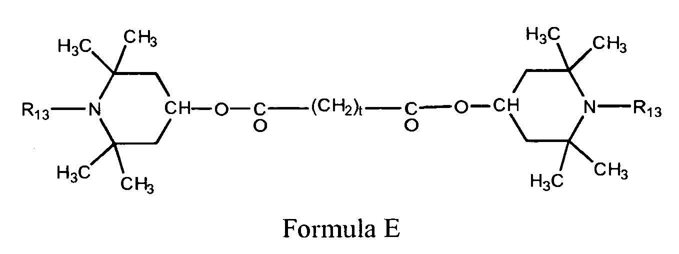 wherein t is a number between 2 and 10
R₁₃ is H or methyl; 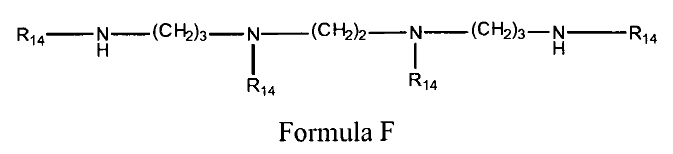 wherein R₁₄ represents the group of Formula (X) 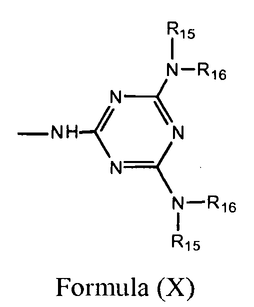 wherein R₁₅ and R₁₆, independently of each other, are selected in the group consisting of hydrogen, C₁-C₄ straight-chain or branched-chain alkyl groups and the above defined group of formula (II); 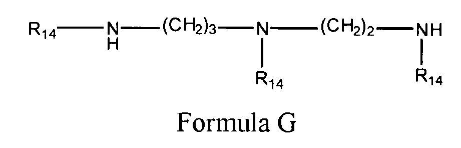 wherein R₁₄ has the meanings above defined for the compounds of formula F.

2. Mixture according to claim 1, wherein the compound of general formula (I) is **characterized by**:
x = 1;
y is comprised between 1 and 10;
m=2 and n=3;
A = NPiR₁;
R₁=n-butyl;
Pi= formula (II) group with R₄=H;
R₂ and R₃ form together with the nitrogen atom a morpholine ring.

3. Mixture according to claim 1 wherein the compound of general formula B is **characterized by**:
p is comprised between 2 and 5;
R₇ = n-butyl
R₆ = formula (II) group with R₄ = H.

4. Mixture of light stabilizers according to claim 1 wherein the compound of general formula C is **characterized by**:
R₈=H
R₉ = C₂ alkylene chain
q is comprised between 10 e 15.

5. Mixture of light stabilizers according to claim 1 wherein the compound of general formula D is **characterized by**:
R₁₀ = H
W = residue of formula (VIII) or (IX)
s=6
r is comprised between 2 and 10.

6. Mixture of light stabilizers according to claim 1 wherein the compound of general formula E is **characterized by**:
R₁₃ = H
t=8.

7. Mixture of light stabilizers according to claim 1 wherein the compound of general formula F is **characterized by**:
R₁₄ wherein R₁₅ = n-butyl and R₁₆ = residue of formula (II) wherein R₄ = methyl.

8. Mixture of light stabilizers according to claim 1 wherein the compound of general formula G is **characterized by**:
R₁₄ wherein R₁₅ = n-butyl and R₁₆ = residue of formula (II) wherein R₄ = methyl.

9. Composition comprising an organic material subject to light degradation and a mixture of light stabilizers according to claims 1-8.

10. Composition according to claim 9 wherein the organic material is a synthetic polymer.

11. Composition according to claim 9 wherein the organic material is a polyolefin.

12. Composition according to claim 9 wherein the organic material is polyethylene, polypropylene, a polyethylene copolymer, a polypropylene copolymer.

13. Method for stabilizing an organic material subject to light degradation, comprising adding to the organic material a stabilizer mixture according to one of claims 1 to 8.

## Patentansprüche

1. Mischung zur Stabilisierung gegenüber Licht, umfassend:
- 10 Gew.-% bis 90 Gew.-% Oligomere der Formel (I) 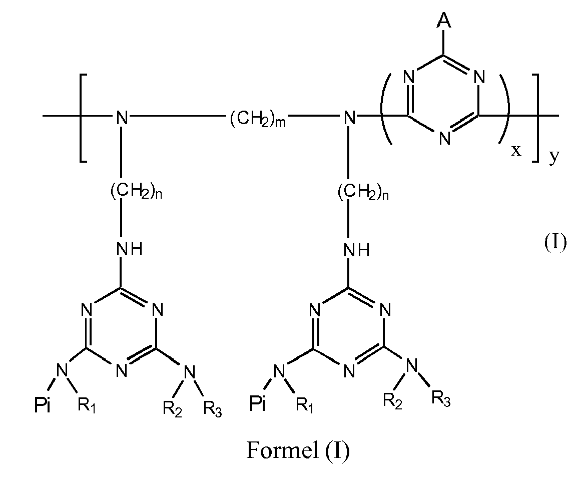 wobei x ist 0 oder 1;
y zwischen 1 und 10 liegt;
m und n, unabhängig voneinander, Zahlen zwischen 2 und 8 sind;
R₁ ausgewählt ist aus einer Gruppe, bestehend aus H und C₁-C₄-Alkylgruppen mit gerader Kette und verzweigter Kette;
R₂ und R₃, unabhängig voneinander, ausgewählt sind aus einer Gruppe, bestehend aus H, C₁-C₈-Alkylgruppen mit gerader Kette und verzweigter Kette, zyklischen Alkylgruppen, welche 5 bis 12 Kohlenstoffatome haben oder zusammen mit dem Stickstoffatom einen heterozyklischen Ring bilden mit 5 bis 7 Mitgliedern, der andere Heteroatome aufweist wie beispielsweise O;
A eine NPiR₁-Gruppe repräsentiert oder eine NR₂R₃-Gruppe;
wobei Pi die Gruppe der Formel (II) repräsentiert 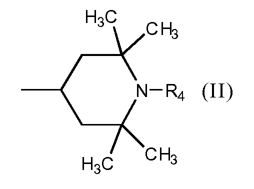 wobei R₄ ausgewählt ist aus einer Gruppe, bestehend aus H, C₁-C₄-Alkylgruppen mit gerader Kette und verzweigter Kette, sowie OR₅-Gruppen, wobei R₅ ausgewählt ist aus einer Gruppe, bestehend aus H, C₁-C₈-Alkylgruppen mit gerader Kette oder verzweigter Kette;
und wobei die Gruppe NPiR sich von der Gruppe NR₂R₃ unterscheidet; und
- wenigstens eine Zusammensetzung, ausgewählt aus denen der Formeln B, C, D, E,
F oder G: 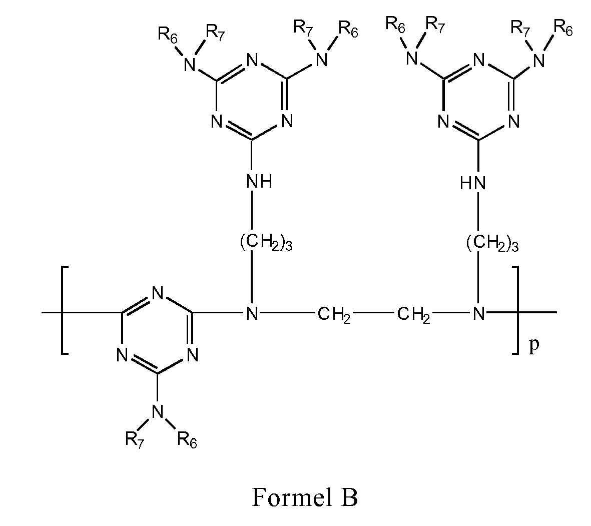 wobei:
R₆ bedeutet: 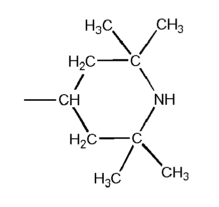
oder: 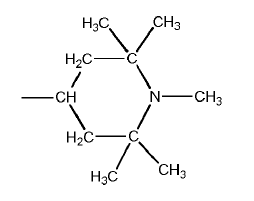 R₇ ausgewählt ist aus einer Gruppe, bestehend aus H und C₁-C₄-Gruppen mit gerader Kette und verzweigter Kette;
p eine Zahl zwischen 2 und 10 ist; 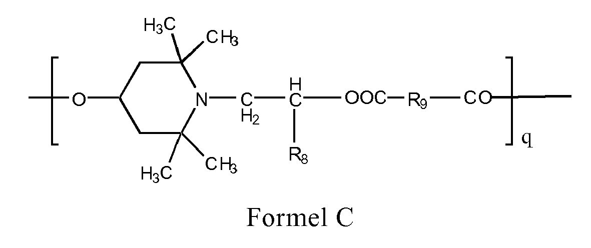 wobei:
R₈ ausgewählt ist aus einer Gruppe, bestehend aus H und Methyl-Gruppen;
R₉ eine direkte Bindung ist oder aus einer Gruppe ausgewählt ist, bestehend aus C₁-C₁₀-Alkylengruppen;
q eine Zahl zwischen 2 und 50 ist; 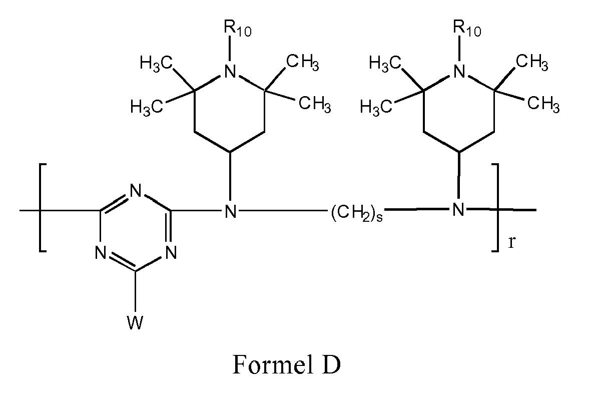 wobei:
r eine Zahl zwischen 2 und 50 ist;
s eine Zahl zwischen 2 und 10 ist;
R₁₀ ausgewählt ist aus einer Gruppe, bestehend aus H und Methyl-Gruppen;
und W ausgewählt ist aus einer Gruppe, bestehend aus den folgenden Gruppen mit den Formeln (VII), (VIII), (IX): 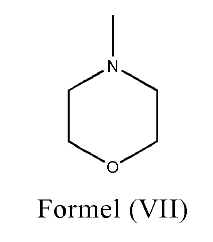 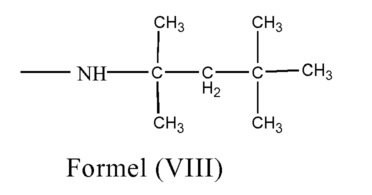 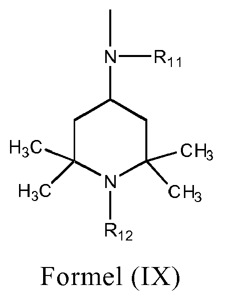 wobei R₁₁ ausgewählt ist aus einer Gruppe, bestehend aus C₁-C₄-Alkylgruppen mit gerader Kette und verzweigter Kette, und R₁₂ ist H oder Methyl; 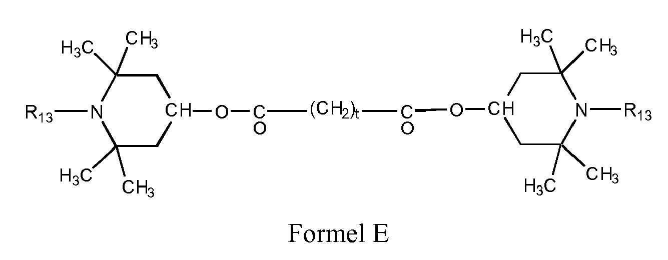 wobei t eine Zahl zwischen 2 und 10 ist
R₁₃ ist H oder Methyl; 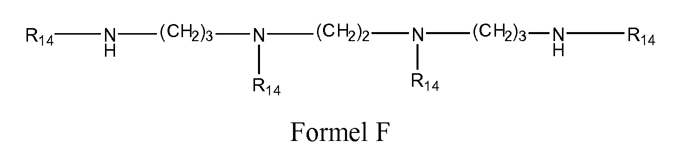 wobei R₁₄ die Gruppe der Formel (X) repräsentiert 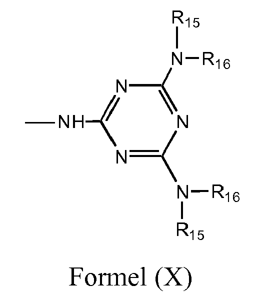
wobei R₁₅ und R₁₆, unabhängig voneinander, aus einer Gruppe ausgewählt sind, bestehend aus Wasserstoff, C₁-C₄-Alkylgruppen mit gerader oder verzweigter Kette, und der oben definierten Gruppe der Formel (II); 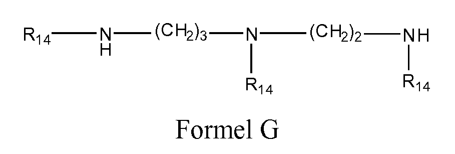
wobei R₁₄ die oben für die Zusammensetzungen nach der Formel F definierte Bedeutung hat.

2. Mischung nach Anspruch 1, wobei die Zusammensetzung nach der allgemeinen Formel (I) **gekennzeichnet ist durch**:
x =1;
y liegt zwischen 1 und 10;
m=2 and n=3;
A= NPiR₁;
R₁=n-Butyl;
Pi= Formel (II)-Gruppe mit R₄=H;
R₂ und R₃ bilden zusammen mit dem Stickstoffatom einen Morpholin-Ring.

3. Mischung nach Anspruch 1, wobei die Zusammensetzung nach der allgemeinen Formel B **gekennzeichnet ist durch**:
p liegt zwischen 2 und 5;
R₇ = n-Butyl
R₆ = Formel (II)-Gruppe mit R₄ = H.

4. Mischung von Licht-Stabilisatoren nach Anspruch 1, wobei die Zusammensetzung nach der allgemeinen Formel C **gekennzeichnet ist durch**:
R₈ = H
R₉ = C₂ Alkylen-Kette
q liegt zwischen 10 und 15.

5. Mischung von Licht-Stabilisatoren nach Anspruch 1, wobei die Zusammensetzung nach der allgemeinen Formel D **gekennzeichnet ist durch**:
R₁₀=H
W = Rest der Formel (VIII) oder (IX)
s=6
r liegt zwischen 2 und 10.

6. Mischung von Licht-Stabilisatoren nach Anspruch 1, wobei die Zusammensetzung nach der allgemeinen Formel E **gekennzeichnet ist durch**:
R₁₃ = H
t = 8.

7. Mischung von Licht-Stabilisatoren nach Anspruch 1, wobei die Zusammensetzung nach der allgemeinen Formel F **gekennzeichnet ist durch**:
R₁₄, wobei R₁₅ = n-Butyl und R₁₆ = Rest von Formel (II), wobei R₄ = Methyl.

8. Mischung von Licht-Stabilisatoren nach Anspruch 1, wobei die Zusammensetzung nach der allgemeinen Formel G **gekennzeichnet ist durch**:
R₁₄, wobei R₁₅ = n-Butyl und R₁₆ = Rest von Formel (II), wobei R₄ = Methyl.

9. Zusammensetzung, umfassend ein organisches Material, welches unter Lichteinfluss einer Zersetzung unterliegt, sowie eine Mischung von Licht-Stabilisatoren nach den Ansprüchen 1 bis 8.

10. Zusammensetzung nach Anspruch 9, wobei das organische Material ein synthetisches Polymer ist.

11. Zusammensetzung nach Anspruch 9, wobei das organische Material ein Polyolefin ist.

12. Zusammensetzung nach Anspruch 9, wobei das organische Material Polyethylen, Polypropylen, ein Polyethylen-Copolymer, ein Polypropylen-Copolymer ist.

13. Verfahren zur Stabilisierung eines organischen Materials, welches unter Lichteinfluss einer Zersetzung unterliegt, umfassend das Hinzufügen einer Stabilisator-Mischung nach einem der Ansprüche 1 bis 8 zu dem organischen Material.

## Revendications

1. Mélange de photostabilisants comprenant :
- de 10 % à 90 % en poids d'oligomères de formule (I) 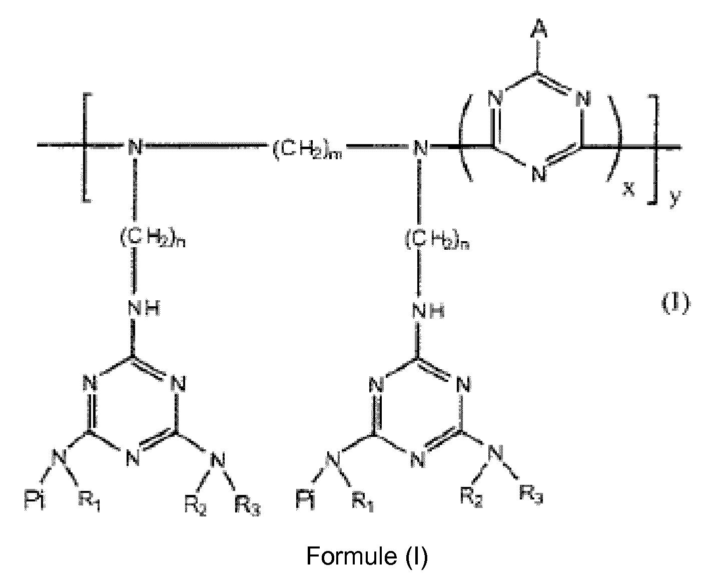 dans laquelle x vaut 0 ou 1 ;
y est compris entre 1 et 10 ;
m et n, indépendamment l'un de l'autre, sont des nombres compris entre 2 et 8 ;
R₁ est choisi dans le groupe constitué par H et les groupes alkyle en C₁-C₄ à chaîne linéaire et à chaîne ramifiée ;
R₂ et R₃, indépendamment l'un de l'autre, sont choisis dans le groupe constitué par H, les groupes alkyle en C₁-C₈ à chaîne linéaire et à chaîne ramifiée, un groupe alkyle cyclique comprenant de 5 à 12 atomes de carbone, ou forment ensemble avec l'atome d'azote un cycle hétérocyclique comprenant de 5 à 7 éléments, comprenant d'autres hétéroatomes tels que O;
A représente un groupe NPiR₁ ou un groupe NR₂R₃ ;
dans lequel Pi représente le groupe de formule (II) 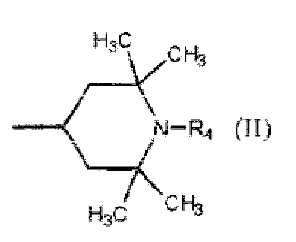 dans laquelle R₄ est choisi dans le groupe constitué par H, les groupes alkyle en C₁-C₄ à chaîne linéaire et à chaîne ramifiée et les groupes OR₅, où R₅ est choisi dans le groupe constitué par H et un groupe alkyle en C₁-C₈ à chaîne linéaire ou à chaîne ramifiée ;
et le groupe NPiR est différent du groupe NR₂R₃; et
- au moins un composé choisi parmi ceux des formules B, C, D, E, F et G : 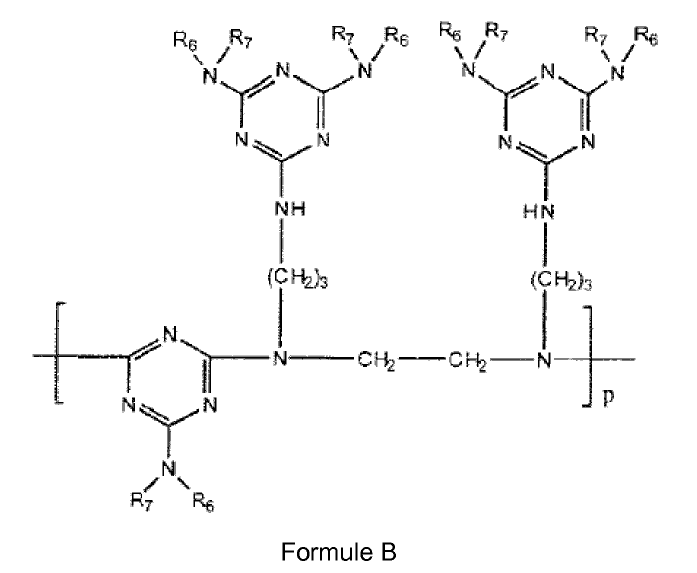 dans laquelle
R₆ signifie : 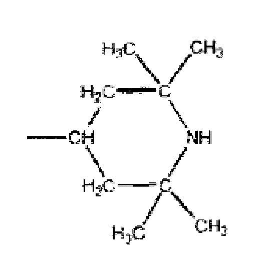 ou 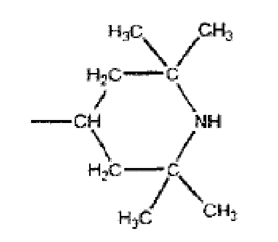 R₇ est choisi dans le groupe constitué par H et les groupes alkyle en C₁-C₄ à chaîne linéaire et à chaîne ramifiée ;
p est un nombre compris entre 2 et 10 ; 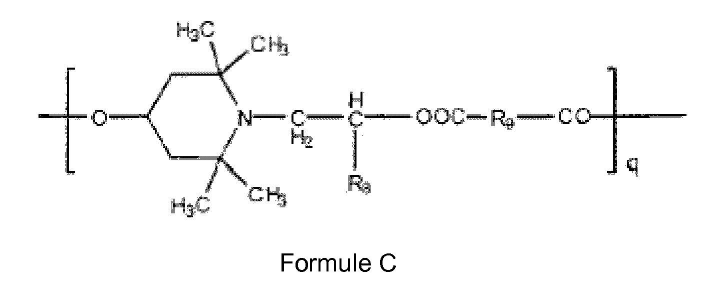 dans laquelle
R₈ est choisi dans le groupe constitué par H et un groupe méthyle ;
R₉ est une liaison directe ou est choisi dans le groupe constitué par les groupes alkylène en C₁-C₁₀;
q est un nombre compris entre 2 et 50 ; 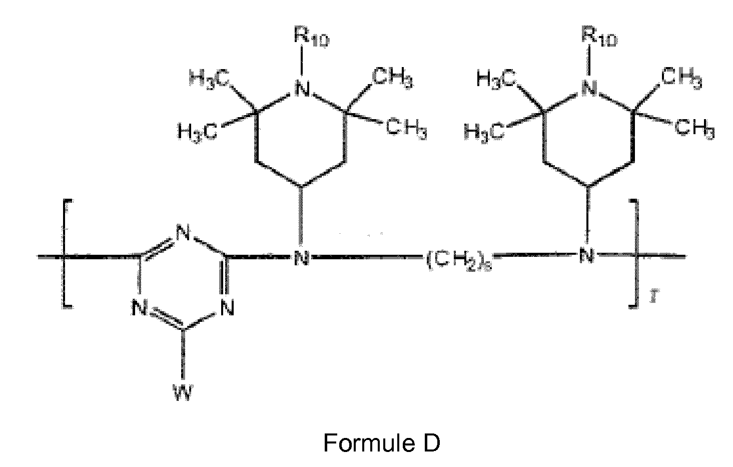 dans laquelle
r est un nombre compris entre 2 et 50 ;
s est un nombre compris entre 2 et 10 ;
R₁₀ est choisi dans le groupe constitué par H et un groupe méthyle ;
et W est choisi dans le groupe constitué par les groupes suivants de formules (VII), (VIII), (IX) : 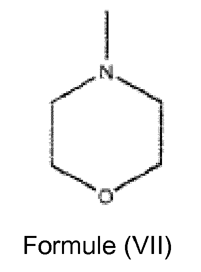 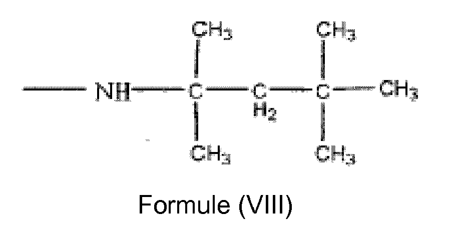 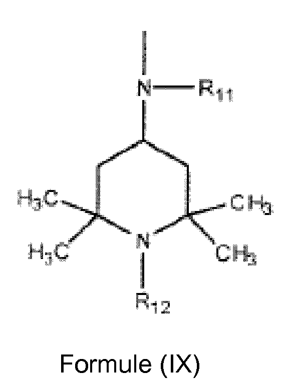 dans laquelle R₁₁ est choisi dans le groupe constitué par les groupes alkyle en C₁-C₄ à chaîne linéaire et à chaîne ramifiée et R₁₂ est H ou un groupe méthyle ; 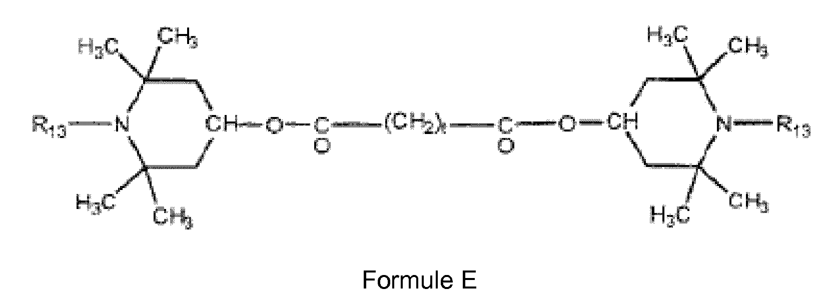 dans laquelle t est un nombre compris entre 2 et 10 ;
R₁₃ est H ou un groupe méthyle ; 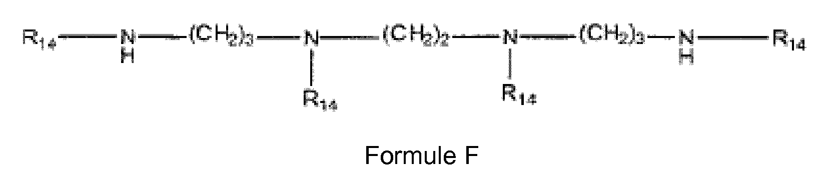 dans laquelle R₁₄ représente le groupe de formule (X) 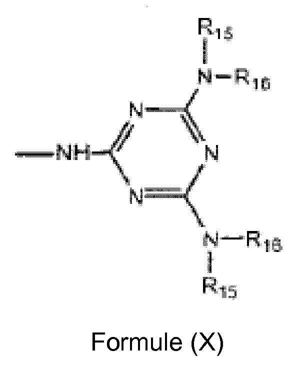 dans laquelle R₁₅ et R₁₆, indépendamment l'un de l'autre, sont choisis dans le groupe constitué par un atome d'hydrogène, les groupes alkyle en C₁-C₄ à chaîne linéaire et à chaîne ramifiée et le groupe de formule (II) défini ci-dessus ; 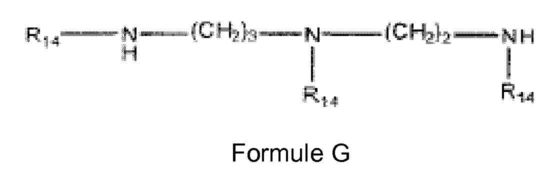 dans laquelle R₁₄ a les significations définies ci-dessus pour les composés de formule F.

2. Mélange selon la revendication 1, dans lequel le composé de formule générale (I) est **caractérisé par** :
x = 1 ;
y est compris entre 1 et 10 ;
m = 2 et n = 3 ;
A = NPiR₁ ;
R₁ = n-butyle ;
Pi = groupe de formule (II) avec R₄ = H ;
R₂ et R₃ forment ensemble avec l'atome d'azote un cycle morpholine.

3. Mélange selon la revendication 1, dans lequel le composé de formule générale B est **caractérisé par** :
p est compris entre 2 et 5 ;
R₇ = n-butyle ;
R₆ = groupe de formule (II) avec R₄ = H.

4. Mélange de photostabilisants selon la revendication 1, dans lequel le composé de formule générale C est **caractérisé par** :
R₈ = H ;
R₉ = chaîne alkylène en C₂;
Q est compris entre 10 et 15.

5. Mélange de photostabilisants selon la revendication 1, dans lequel le composé de formule générale D est **caractérisé par** :
R₁₀ = H ;
W = résidu de formule (VIII) ou (IX) ;
s = 6;
r est compris entre 2 et 10.

6. Mélange de photostabilisants selon la revendication 1, dans lequel le composé de formule générale E est **caractérisé par** :
R₁₃ = H;
t=8.

7. Mélange de photostabilisants selon la revendication 1, dans lequel le composé de formule générale F est **caractérisé par** :
R₁₄ où R₁₅ = n-butyle et R₁₆ = résidu de formule (II) dans laquelle R₄ = méthyle.

8. Mélange de photostabilisants selon la revendication 1, dans lequel le composé de formule générale G est **caractérisé par** :
R₁₄ où R₁₅ = n-butyle et R₁₆ = résidu de formule (II) dans laquelle R₄ = méthyle.

9. Composition comprenant une matière organique sensible à la dégradation par la lumière et un mélange de photostabilisants selon les revendications 1 à 8.

10. Composition selon la revendication 9, dans laquelle la matière organique est un polymère synthétique.

11. Composition selon la revendication 9, dans laquelle la matière organique est une polyoléfine.

12. Composition selon la revendication 9, dans laquelle la matière organique est un polyéthylène, un polypropylène, un copolymère de polyéthylène, un copolymère de polypropylène.

13. Procédé de stabilisation d'une matière organique sensible à la dégradation par la lumière comprenant l'ajout à la matière organique d'un mélange de stabilisants selon l'une des revendications 1 à 8.
